# EUROPEAN PATENT APPLICATION

(11) **EP 2 974 902 A2**
(43) Date of publication of application: **20.01.2016**
(21) Application number: 14719529.1
(22) Date of filing: 12.03.2014
(51) Int. Cl.: B60L 11/18

(54) **MODULAR ELECTRIC ENERGY STORAGE DEVICE AND CORRESPONDING USES**

(30) Priority: 12.03.2013 PT 10683413
(71) Applicant: D2M - Energytransit, Unipessoal, Lda., 4149-002 Porto (PT)
(72) Inventor: LOPES DE SOUSA SILVA, Dâmaso, P-4435-200 Porto (PT); CARRETO MARTINS, Luís Filipe, P-3830-768 Gafanha Da Nazaré (PT)
(74) Representative: Ferreira, Maria Silvina
(86) International application number: PCT/IB2014/059685
(87) International publication number: WO 2014/141097

(57) **Abstract**

Device for storage of electrical energy of high capacity (MEESD) using batteries (1) of electric vehicles (EVB) connected by power electronics devices (2), allowing the connection of individual batteries present in the necessary configurations.

The mechanical conception of MEESD allows the safe transportation of the fully charged BVEs, from charging location to the place of their use.

The Management and Control System (MCS) from MEESD, establishes EVBs connections settings in order to allow the connection to any kind of electrical power generation unit, namely Renewable Energy Sources (RES), without implying external transformation; also to raise the output of maximum current, it can set the necessary batteries in parallel, for example to supply energy to the simultaneous fast charging of several Electrical Vehicles (EV). MEESD makes possible transportation of electrical energy produced by RES, to, for example, facilities that provide fast charging of EVs without usage of the existing distribution grid.

## Description

### Technical field of the invention

Device that allows storing electricity produced by Renewable Energy Sources (RES), grants its safe transportation to the place of usage/consumption, being able to perform the functions it has been designed for without overloading or interfering with the grid. Intrinsically related with electrical mobility, contributes for the increase of its viability by reducing some of the barriers to its growth. Such are the cases of low autonomy of electrical vehicles (EV), the overload on the grid as result of a high number of simultaneous fast charging EV, and the absolute need of establishing a dedicated infrastructure for this way of locomotion.

### State of the art

Electric vehicles (EV) are the best option in the establishment of a new paradigm to the economic activity centred on the automobile. Based on the goal, growingly urgent, of assuring higher rationality and restraint in the use of fossil fuels thus diminishing the environmental load, the EV appears like an effective solution towards the desired path.

Being a fact that the EV by itself produces no emissions, the electrical energy it uses as power source was necessarily produced by some means and to assure that the impact on environment is minimal, the renewable energy sources are the most rational option. All the available renewable energy sources for the usage of electrical mobility are therefore under thorough scrutiny.

The facilities where renewable energy is transformed in electricity are placed in locations where the potential for a given energy source is maximized (for example: wind farms on top of mountains, coastal zones or even offshore).

The electrical energy produced in these units is then transformed according to the global grid settings. The transport within the grid is made with successive downgrade of tension as it gets closer to the final consumer. The total distance as well as the number of transformations implies proportional losses from the original amount of energy produced.

For EVs to comply their function, they store electric energy in rechargeable batteries (EVB), builted from modular units of electricity storage. The operation of charging the EVB can be made in different modes (fast charging in a higher current or slowly through a domestic plug). The desired speed of charging determines therefore the kind of electrical current needed.

In some cities, worldwide, there are already some facilities for charging EVs, but its number is still low thus seriously diminishing the freedom of action of the EV user.

In the rare cases where the EV penetration on the market was more intense some users face waiting times for the use of charging facilities. On top of that the number of simultaneous fast charges is limited to prevent damage and instability to the grid as result of overload. The availability of charging points will be even smaller in those periods, eventual or seasonal of great concentration of EVs as hypothetical big sport, cultural or religious events.

Furthermore there is no logic or efficiency in establishing an electrical infra-structure, designed to comply even with peak demands of energy (as holiday season), because it would be in sub-usage most of the time. This over dimensioned grid would imply over cost and an enormous return period thus revealing itself financially unsustainable.

The Modular Electrical Energy Storing Device (MEESD) provides an effective answer to all the above mentioned issues.

MEESD consists of several electric vehicle batteries (EVB) interconnected by a power electronics network that allows simultaneously several types of connections between the EVB present within the device. In reality the connections network can be made in series and/or parallel among the number of EVBs necessary to achieve the desired tension (series connection to raise tension) and output (parallel connection to allow a higher current).

MEESD can be seen as a set of interconnected EVBs, with the capability of changing its internal connections.

The design of MEESD is mechanically compact in order to be placed on a transport vehicle, adding this way full mobility. MEESD can then be displaced to a renewable energy facility (RES) to be fully charged as if it were "merely" an energy container.

The charging tension of MEESD can be adjusted by its internal electronics network, meaning that there is no need for transformation of the electric current by any technology (external to MEESD). The charging operation can be therefore made at the general operating tension of the RES (e.g. medium tension). Once fully charged the MEESD will move on to the stored energy usage location.

Any individual battery (EVB) present on the MEESD can be used to replace directly the battery of an EV, as long as that EV is designed to permit that operation (EV with interchangeable batteries option). By this process it is possible, in a very short period of time, to reinstall the full autonomy of that EV, removing the present need for a "long" waiting time to proceed with the trip with full autonomy. The nearly empty battery the EVB had before can be integrated on the MEESD, being the newest member of its EVBs matrix.

The ability to establish internal connections settings among the individual EVB provides a big span of electrical currents available, that can for example supply energy to several EV charging even in fast mode, without connection with the general electric grid, thus removing loss of quality on the current it carries (by not introducing current variations e frequency oscillations).

In the case of unexpected or extraordinary electrical demands from the grid, the MEESD can also be used to satisfy them locally, supplying the energy surplus required. The MEESD will feed its energy in the grid as if it were a common RES, and commercialized accordingly.

As one result from this the regular production facilities do not need changes in energy debit to attend demand, diminishing additional losses from transformation and transport. The more stabilized is the production of generation facilities, the lower the frequency of the required maintenance to production units multiple equipment.

### Summary

This document describes a device for electric energy storing consisting in a plurality of batteries (1); a connection to the electrical grid and/or to a renewable electrical energy production facility (5, 6); a power electronics network (2) interconnecting part or several parts of the mentioned batteries (1) by serial connections, parallel connections or mixed connections series-parallel; a framework supporting the mentioned batteries (1).

In an embodiment, the power electronics network (2)for interconnection of the mentioned batteries (1) is settled on the electrical energy storage device by planes in which are also arranged several batteries (1) interconnected by the referred network (2).

In another embodiment, the power electronics network (2) for interconnection of the mentioned batteries (1) is placed on the electrical energy storage device, inside each plane, in two directions with multipolar interconnections through power electronics switches on the crossing of those two directions of the referred network (2).

Yet in another embodiment, the two directions in which are arranged the batteries on the electrical energy storage device are linear and orthogonal, or radial and concentric, or are substantially orthogonal, or are substantially radial and concentric.

In an embodiment, the power electronics network (2) for interconnection of the mentioned batteries (1) of the electrical energy storage device is settled in planes and includes interconnections through power electronics switches (2) between the networks of the referred planes.

In another embodiment, the power electronics network (2) for interconnection of the mentioned batteries (1) is placed on the electrical energy storage device, inside each plane, in two directions, including multipolar interconnections through power electronics switches on the crossing of those two directions of the referred network and including multipolar interconnections through power electronics switches between the crossing of different planes.

Yet in another embodiment, the supporting framework of the referred batteries (1) on the electrical energy storage device includes elements of displacement for insertion, translation and removal of the referred batteries (1).

In one embodiment, the batteries (1) on the electrical energy storage device are electrical vehicle batteries. This document also describes a method of operation of the device that includes a step of interconnecting at least a set of necessary batteries (1) in series to achieve a pre-set tension and the step of interconnecting at least a set of necessary batteries in parallel to achieve a pre-set electric current, either for charging or discharging of the referred batteries.

In an embodiment, the operation method includes additionally the steps of:
- Disconnecting from the interconnection at least one battery (1) to be deactivated;
- The necessary remainder batteries (1) are interconnected in series to maintain the pre-set tension and interconnecting the necessary batteries (1) in parallel to maintain the pre-set electric current.

In another embodiment, the mentioned steps of interconnecting the batteries on the operation method of the device include the establishment of one or more serial circuits, parallel or mixt series-parallel, on one of the mentioned planes of the interconnection power electronics switches network (2) and between two or more of the mentioned planes of the interconnection power electronics switches network (2).

This document also describes the usage of the device in which its charging is made directly at the tension the generating apparatus of the renewable electrical source (5, 6) operates, by the interconnection in series of the necessary number of batteries (1), included on the referred device.

This document also describes the usage of the device in which it is supplied, in an immediate way, all or part of the electric energy stored in the referred device to the grid (13), by the connection in parallel of the necessary number of batteries(1)included on the referred device.

This document also describes the usage of the device in electric vehicle batteries in connection with a generating apparatus of renewable electrical energy (5, 6).

### General description

The main function and expectably the main role of MEESD (Modular Electrical Energy Storage Device) is energy storage, from where it derives its name. Nevertheless the features that it includes on its concept bring other functions that can, in real usage be perceived as more relevant at a given point of the chain.

The concept of MEESD is undeniably related to electric mobility, and particularly to full electric automobiles, in fact whenever a MEESD is at work it integrates EV crucial component - batteries. It is possible to state that MEESD is a storage device born from the electric mobility with the goal of storing electricity for the electric vehicles usage.

Therefore the first step of MEESD role is to store electricity, being of course desirable that it comes from a renewable energy source (RES). That is so because renewable energy is basically intermittent and the availability of the resource that provides energy (wind, sun, water, etc) is not controlled by man. MEESD is the answer to the old issue of storing energy for a future usage, in the exact form that it is produced, i.e. without transformation, contrary to what happens when using electricity from wind farms to pump water upstream for later turbine action. MEESDs can be connected to any kind of RES and due to their agility of configuration, making that connection in the most convenient way for the RES. The storing operation, meaning the complete charge of the device, has its duration determined by the batteries characteristics it includes at that time.

Achieving its full capacity the MEESD will then carry that amount of energy to the point of its usage, without relevant losses. This feature, although important and essential to the concept of MEESD is the less relevant in terms of time of operation.

As per the usages of the stored electricity we must consider mainly three, from the most relevant to the least expectable:
- Supply fully charged batteries for EVB swapping
- Supply energy for EV fast charging
- Injection in the GRID

It's on the first usage that MEESD has probably more impact on the electric mobility development. In fact it assures a lot of important aspects:
- The end of the autonomy limitation
- Real emission free transport
- Economical sustainability to the whole scenario.
- Allowing a faster change from ICE (Internal combustion engine) to electric cars.

Supressing the need of a dedicated transport and distribution grid the existence of MEESD casts away the biggest investment implied by an electric mobility option.

### Description of the figures

For a better understanding of the embodiments, the attached figures represent preferential embodiments, but in no way should these be regarded as limitations to the object of the invention.

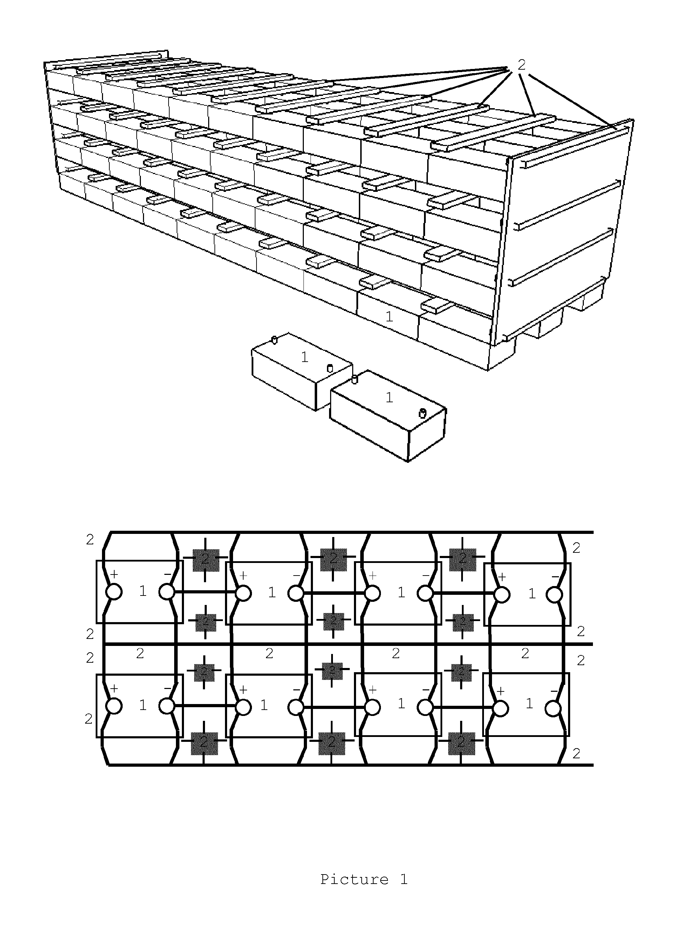

Figure 1 - Schematic of a Modular Electrical Energy Storage Device, grouping several electric vehicle batteries (1) connected by the interconnection network (2).

The device is builted in a way, its dimensions are similar to a common cargo container, thus revealing its feature of transporting the charged batteries from the renewable energy sources to the energy usage location.

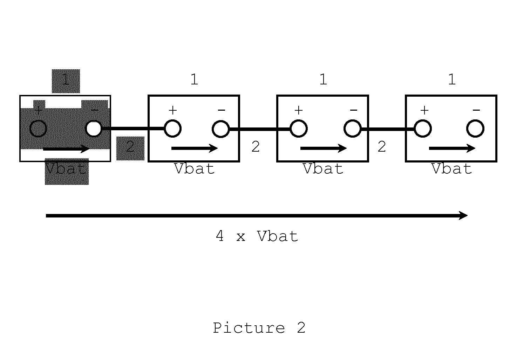

Figure 2 - Serial connection of electric vehicle batteries (1) through power electronics devices (2), included on the Modular Electrical Energy Storage Device. The circuit allows an output tension higher than the maximal tension of each individual battery (1).

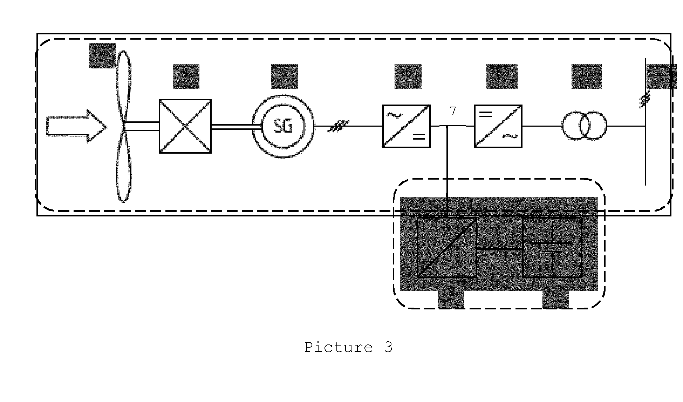

Figure 3 - Example of interaction between a Modular Electrical Energy Storage Device (9) connected through a power electronics device (8) for controlling it's charging or the output of electrical current for the electrical distribution grid.

It is highlighted the connection, directly to the DC-link of a current converter (6,7,10) that adjusts the current produced by an aeolian generator consisting in a turbine (3), gear box (4) and electrical generator (5). The wind turbine is meant to supply electrical energy to the distribution grid (13) through a transformer (11).

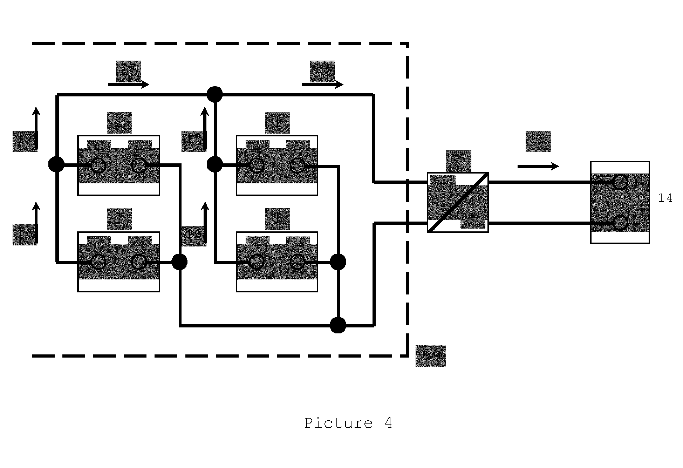

Figure 4 - Detail within a MEESD, of the parallel connection of electrical vehicle batteries (1) by means of power electronics devices to increase the output of the overall current (18). The final output current released by the parallel circuit (18) equal the sum of the output currents (16,17) of each battery (1).

The feature of supplying current from the connections from a set of batteries in parallel (1) to an electronic charging device (15) for electric vehicle batteries (14) allows to charge the battery of an electric vehicle in fast mode, through high current (19), without using the distribution grid.

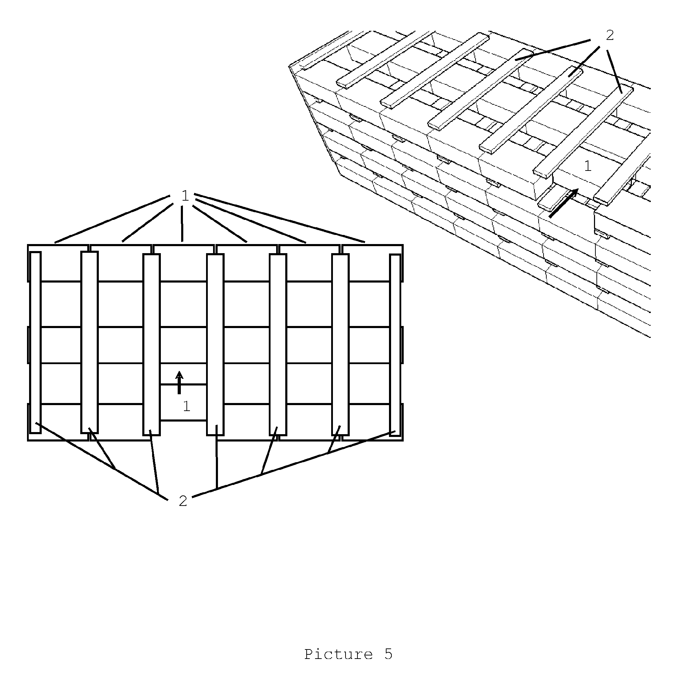

Figure 5 - Detail of the displacement of the electric vehicle battery (1) in the interconnection bar (2) towards the internal extraction corridor, in the start of its removal from the MEESD.

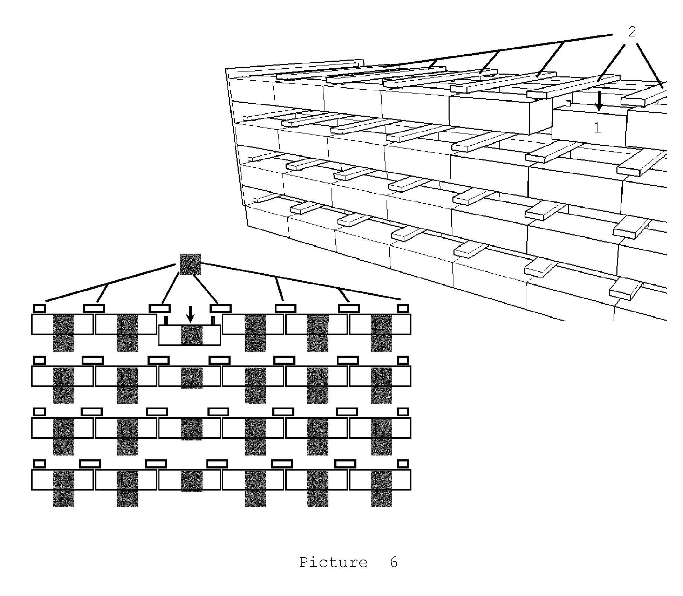

Figure 6 - Operational disconnection of the electric vehicle battery (1) from the interconnection bars (2), for it's displacement along the MEESD extraction corridor.

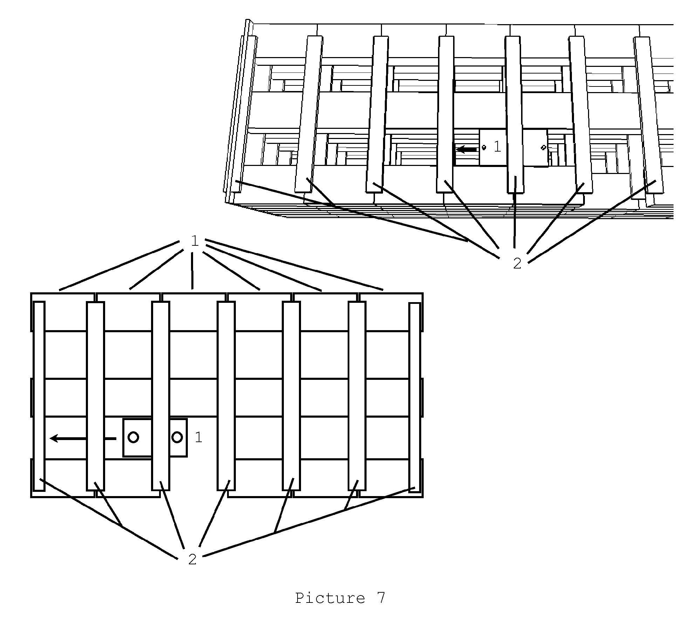

Figure 7 - Electric vehicle battery (1) movement on the extraction corridor.

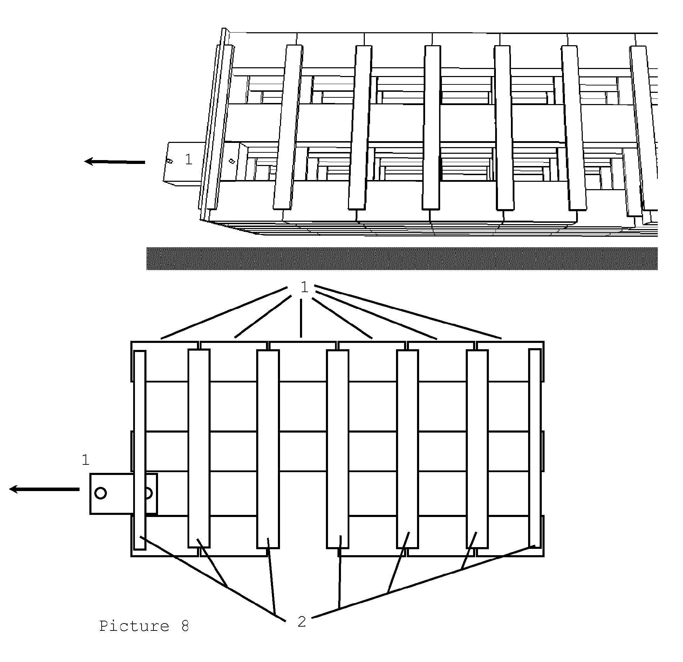

Figure 8 - Extraction of the electric vehicle battery (1) from the modular electrical energy storage device, for example to the replacement on an interchangeable batteries electric vehicle.

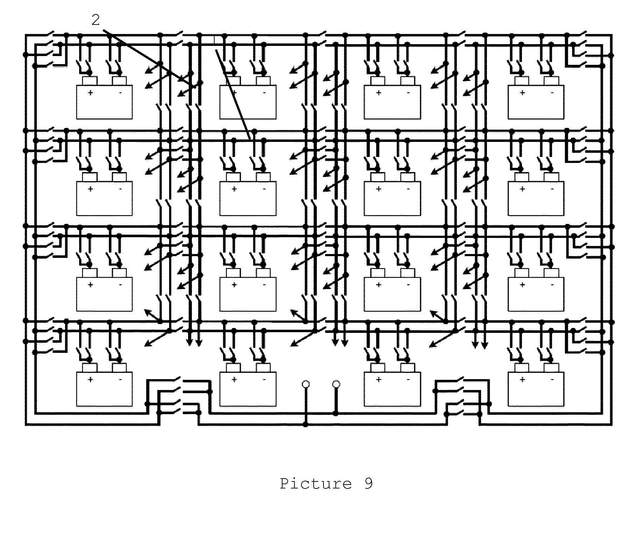

Figure 9 - Electronics setting of a power electronics switches network (2) for interconnection of batteries (1), showing the interconnections both in the same plane of the interconnection network and the perpendicular plane, allowing the routing of connections within the three dimensions of the device.

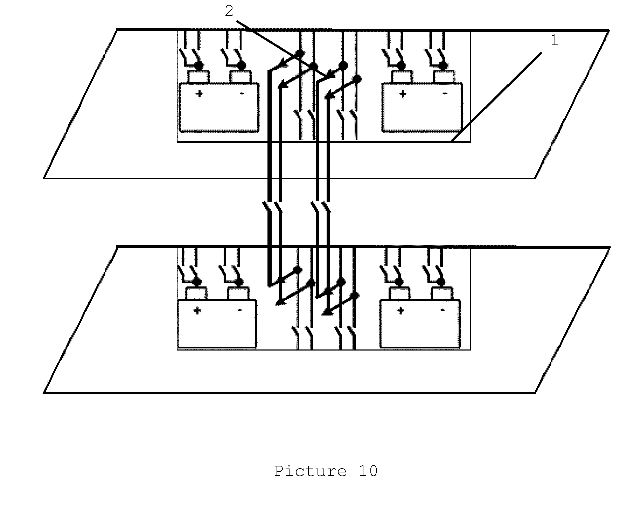

Figure 10 - Schematic of the working principle of the interconnections in a perpendicular plane to the power electronics switches' network (2) on the interconnection of batteries (1).

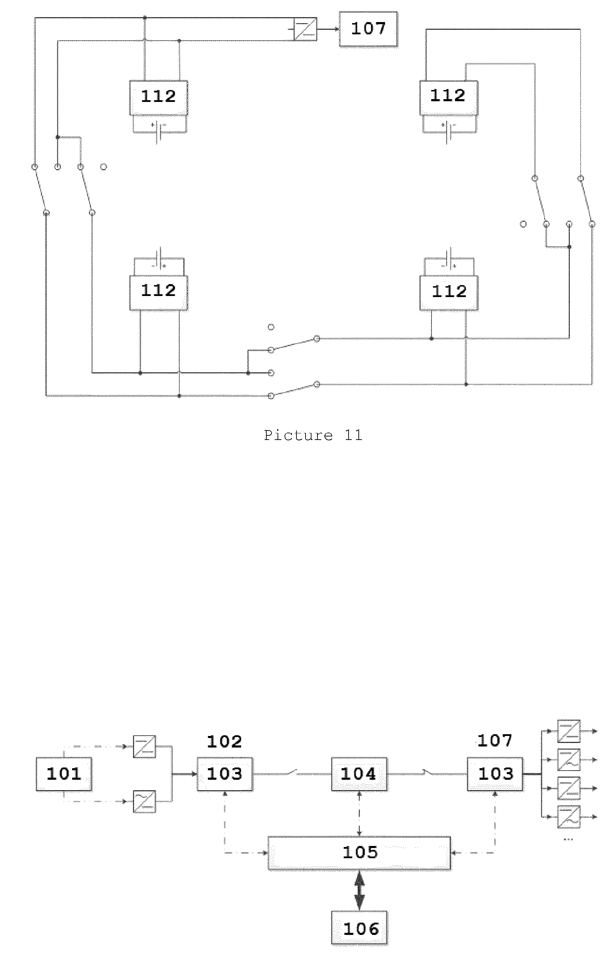

Figure 11 - Block diagram of the matrix module, where:
   107 - Output system;
   112 - Battery Module.

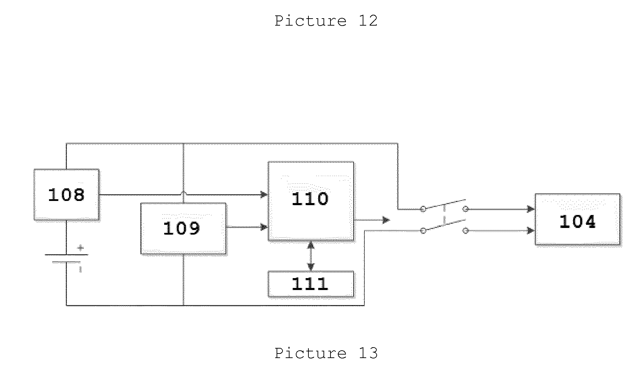

Figure 12 - Block diagram of modular electrical energy storage device, where:
   101 - Renewable energy source;
   102 - Charging/storage system;
   103 - Monitor and control;
   104 - Matrix;
   105 - Management and control system;
   106 - Human interface;
   107 - Output system.
Figure 13 - Block diagram of the battery module, where:
   104 - Matrix;
   108 - Current detector;
   109 - Voltage detector;
   110 - Microcontroller;
   111 - Communication.

### Detailed description of the invention

The main function of MEESD (Modular Electrical Energy Storage Device) is energy storage, from where it derives its name. Nevertheless the features that it includes on its concept bring other functions that can, in real usage be perceived as more relevant at a given point of the chain. The MEESD embodies individual batteries (1), being the same present on the electric vehicles (EV).

Each battery is inserted in a pod or socket that integrates a Battery Module (BM) that supervises in real time the battery status (tension level, charge and current output) transmitting that information to the Management and Control System (MCS). The batteries are grouped in matrixes. Each matrix includes besides the batteries a set of power electronics devices, which allow the associations of connections between the batteries. Control and management of each matrix or of the association of matrixes is made in real time by the MCS.

An output tension of MEESD depends therefore on the interconnections (2) among the individual batteries actually working. It is possible, through the MCS to adjust the number and type of interconnections necessary to supply a given demand (picture 2).

If the MEESD is going to be charged by a power source with an output tension higher than a multiple of an individual battery, a series connection can be made in a way that charging may occur directly at that tension.

The adaptability of MEESD allows therefore its charging from any power source or level of electrical tension without the need of an external transformation of the charging current.

Exemplifying, a wind turbine can charge directly a MEESD (Picture 3).

The turbine (3) drives, through the gear box (4) an electric generator (5), producing electricity. This electricity is generally out of faze and frequency with the electrical current transported by the transport/distribution grid, so it is necessary a current converter. The general design of present converters consists on a rectifier unit (6) charging capacitors (DC-link) (7) and an inverter module (10) to create an alternated signal current, in faze and frequency with the grid. Finally a transformer (11) adjusts the alternated current so the insertion on the grid is feasible (13).

The MEESD (9) allows, thanks to its adjustable charging tension feature, to be connected directly to the DC-link of the inverter (7). Through power electronics module (8) is also possible to use the MEESD to supply electric current to the DC-link (7) for grid insertion or to compensate wind turbine production oscillations (3).

Only when the electricity is inserted on the grid, the transformer (11) is necessary to adjust the level of tension coming from the inverter (10) to the grids tension level (13). Charging the MEESD (9) there will be no losses from transformation.

### Supplying high current

The feature of connecting the individual batteries, arranged in matrixes, allows connecting in parallel the necessary number of batteries to supply the high current implied to the fast charging of an EV battery. This way the EV will soon become operational without any risk of grid overload, even if there are simultaneously other EVs connected to the MEESD. When at least one high current output is required, the necessary associations of connections on the necessary matrixes are activated, being the final output supplying the fast charging operation, the sum from the individual charges activated.

### Example

On Picture 4, four batteries (1) present in a MEESD are connected to supply high currents.

The individual batteries (1) are connected in parallel supplying each one the maximum possible current (16). Two batteries deliver an added current (17) that will be the double of the individual charge (16) if they have the same exact capacity. The final current (18) is the sum of all the currents delivered by all the batteries that being all identical, would lead to a quadruple of the individual current (16). Connection with a battery charger (15) supplies the correct current and tension in the right conditions to charge the EVB (14) in fast mode. Additionally the dynamic interconnections allow an optimized energy management of each individual battery on the MEESD using it at his maximum though avoiding the excessive discharge, without interrupting a fast charge of an EV or compromising the lifespan of the batteries.

### Transportability

In order to provide the necessary energy to the EV charging points, the MEESD is built in a way it is easily transportable. The goal is to be as close as possible of the present cargo vehicles, for example a standard cargo container, which can either be part of a truck or be towed by one. The braking system can be regenerative. The bigger advantage for the concept is obviously to have an electric truck.

### Battery interchangeability

The design of MEESD and its power electronics network assure the possibility of a fast change/swap of a fully charged EV battery it contains for a nearly depleted EV battery from a customer driver. The charge battery is removed from the MEESD and immediately replaced by the one the costumer had until now, and that will be fully charged on the next charging/storage of the MEESD. The mechanical construction of the MEESD enables the displacement of any EVB it holds for swap/replacement. The internal system of gutters and rails moves the EVB to an extraction area on the border of the MEESD.

### Example

The EVB (1) is dislocated from its structural position on the MEESD to a removal corridor (Picture 5).

Previously to any battery movement its electrical connections are deactivated by the control unit to avoid any damage, namely on the power electronics network. Once it is located on the extraction corridor, the battery (1) slides downwards physically disconnecting itself from the interconnection (Picture 6).

After being free of the modular interconnections, the battery is led to the exterior of the MEESD to be swapped by a depleted EVB (Picture 7 e Picture 8).

The removal operation described can be executed even while the MEESD performs its other functions of energy supply, since the modular interconnections enable the bypass or disconnect the battery (1). The management and control system (MCS) manages the charges of the EVBs inserted on the MEESD, keeping as many fully charged batteries (1) available for swapping as possible. Insertion of an EVB on the MEESD is the same on the reverse order of steps.

The feature of allowing associations of connections between individual EVBs or matrixes provides multiple possibilities of effective connections among the batteries inside a MEESD.

The interconnection system consists on connection points that allow the batteries connection in series or parallel according to the needs, high current or high tension.

The associations of connections could be divided in horizontal connection points and vertical connection points.

Whilst the horizontal connection nodes enable the connection of batteries over a horizontal plane accordingly to the needs the vertical nodes allow interconnecting different horizontal planes, conferring a larger flexibility to the MEESD with three-dimensional associations of connections.

Once the horizontal nodes allow multiple associations necessary to the MEESD multiple functions, the vertical nodes can connect different plane associations, conferring a nearly total interconnectivity between the batteries regardless of their location inside the MEESD. Additionally the vertical interconnection can connect or disconnect batteries or matrixes, to assure stable current or tension to MEESD functions.

This means, that beyond the flexibility of interconnecting batteries in several useful associations, the system can also establish a hierarchy of batteries or matrixes, organizing them in interconnected planes which are successively interlinked by perpendicular connections to the first ones.

The connections nodes consist of power electronics switches, providing the necessary speed of connection or interruption to commute the batteries or matrixes to assure the required stability of the current or tension.

In alternative, the associations of connections between batteries or matrixes are made by switches, providing the necessary speed of connection or interruption to commute the batteries or matrixes to assure the required stability of the current or tension.

Additionally the system has the advantage of avoiding overloading each EVB or matrix, replacing it by another battery or matrix available within the MEESD without compromising the global function of the MEESD.

Picture 11 illustrates a form of construction of the matrix module, consisting on a given number of batteries, having the feature to arrange the configuration of the connections between them either in series or parallel in a completely dynamic way. Default configuration associates all the batteries in parallel, as per the storage/charging operation. Activating the switches, the matrix acquires the necessary configuration to supply energy, tension and current, necessary to charging the costumer EVs.

Over Picture 12 is presented a form of construction of MEESD consisting on three power systems. The charging system (102) conditions the energy coming from the RES (101) promoting the storage on the EVBs inserted on the matrixes.

Each matrix allows enabling the several associations of connections among the EVBs it integrates. The output system (107) regulates the currents exiting the MEESD supplied by the energy stored on the active EVBs, either on AC or DC, accordingly to the needs.

All the operative process on the MEESD can be supervised or controlled by the human operator through the human interface (106) with the Management and Control System (105). This system quantifies the levels of energy, stored, supplied and remainder as well as the number and type of realized operations.

Picture 13 depicts a form of construction of the battery module, attached to each EVB, that supervises in real time the battery levels of tension and current and charge, communicating this information to MCS (105).

The invention is not, naturally, in any way limited to the described embodiments, being that someone with average knowledge on the matter can predict or conceive several modifications within the scope of the claims attached.

The embodiments described are combinable among each other. The following claims define additionally preferential embodiments of the present invention.

## Claims

1. Electrical energy storage device comprising a plurality of batteries; a connection to the grid and/or to a renewable electrical energy generating equipment; a power electronics switches network for interconnection of part or parts of the referred batteries by series connections, parallel connections or mixed series-parallel connections; a supporting construction for the referred batteries.

2. Electrical energy storage device according to the previous claim in which the power electronics switches network for interconnection of the referred batteries is set in planes on which there are also located a plurality of batteries interconnected by the referred network.

3. Electrical energy storage device according to the previous claim in which the power electronics switches network for interconnection of the referred batteries is settled, inside each plane, in two directions with multipolar interconnections by power electronics switches on the crossing of those two directions of the referred net.

4. Electrical energy storage device according to the previous claim in which the two directions in which the batteries are linear and orthogonal, or are radial and concentric, or substantially radial and concentric.

5. Electrical energy storage device according to the previous claims in which the power electronics switches network for interconnection of the referred batteries is settled in planes and includes interconnections with power electronics switches between the different planes networks.

6. Electrical energy storage device according to the previous claim in which the power electronics switches network for interconnection of the referred batteries is settled, inside each plane, in two directions includes multipolar interconnections by power electronics switches on the crossing of those two directions of the referred net and includes multipolar interconnections by power electronics switches between the referred crossing of different planes.

7. Electrical energy storage device according to the previous claims in which the supporting construction of the referred batteries includes displacement elements for insertion, translation and removal of the referred batteries.

8. Electrical energy storage device according to the previous claims in which the batteries are electrical vehicle batteries.

9. Method of operating the device described in any of the claims 1-8 comprising the step of interconnecting at least one set of batteries in series necessary to attain a pre-set tension and the step of interconnecting at least one set of batteries in parallel necessary to attain a pre-set current, either for charging or discharging the referred batteries.

10. Method of operation according to the previous claim comprising additionally the steps of:
- disconnecting the interconnection of at least one battery to be deactivated.
- the necessary remainder batteries, are interconnected in series to maintain the pre-set tension and interconnecting the necessary batteries in parallel to maintain the pre-set electric current.

11. Method according to any of the claims 9-10 in which the mentioned steps of interconnecting the batteries on the operation method of the device include the establishment of one or more serial circuits, parallel or mixt series-parallel, on one of the mentioned planes of the interconnection power electronics switches network and between two or more of the mentioned planes of the interconnection power electronics switches network.

12. Use of the device as described in any of the claims 1-8, comprising supplying, in an immediate way, all or part of the electrical energy stored in the mentioned device to the grid, by connecting in parallel the necessary number of the batteries included on the referred device.

13. Use of the device described in any of the claims 1-8, comprising using electrical vehicle batteries in said device in a connection with a renewable electrical energy producing equipment.
